# EUROPÄISCHE PATENTSCHRIFT

(11) **EP 0 493 626 B1**
(45) Veröffentlichungstag und Bekanntmachung des Hinweises auf die Patenterteilung: **13.04.1994**
(21) Anmeldenummer: 90125204.9
(22) Anmeldetag: 21.12.1990
(51) Int. Cl.: G01N 27/416

(54) **Ausgangsschaltung zur analogen Ausgabe eines in Bezug auf Steilheit und Nullpunkt kompensierten Messsignals und Verfahren zum Ausgeben des Messsignals**
Output circuit for analogically indicating a measure signal, which is offset and gain corrected, and method for indicating the measuring signal
Circuit de sortie pour l'indication analogique d'un signal de mesure compensé par rapport au point zéro et à la pente et procédé pour indiquer le signal de mesure

(43) Veröffentlichungstag der Anmeldung: 08.07.1992
(73) Patentinhaber: KNICK ELEKTRONISCHE MESSGERÄTE GMBH & CO., D-14163 Berlin (DE)
(72) Erfinder: Feucht, Wolfgang, W-1000 Berlin 37 (DE); Martell, Thomas, W-1000 Berlin 33 (DE)
(74) Vertreter: Knoblauch, Andreas, Dr.-Ing.

(56) Entgegenhaltungen:
- EP-A- 0 140 460
- DE-A- 2 937 227
- GB-A- 1 602 385
- GB-A- 2 051 371
- US-A- 4 039 933
- US-A- 4 460 967

## Beschreibung

Die Erfindung betrifft eine Ausgangsschaltung zur analogen Ausgabe eines in Bezug auf Steilheit und Nullpunkt kompensierten Meßsignals einer ionen- oder redoxpotential-sensitiven Meßkette mit einem Signaleingang zum Einspeisen des Meßsignals, einem mit dem Eingang verbundenen A/D-Wandler, einer mit dem A/D-Wandler verbundenen Steuereinrichtung, gegebenenfalls einer Temperaturmeßeinrichtung zur Erfassung der Temperatur der Meßkette und einem Signalausgang. siehe z.B. DE-A- 2 937 227, wobei bei der Erfindung im Unterschied hierzu die Ausgabe analog erfolgt. Ferner betrifft die Erfindung ein Verfahren zum Ausgeben eines analogen Meßsignals einer ionen- oder redoxpotential-sensitiven Meßkette, bei dem in einem Kalibrierschritt die Steilheit und die Nullpunktversshiebung der Meßkette aus in Verbindung mit mindestens zwei Normproben gewonnenen Ausgangssignalen errechnet und abgespeichert werden und in einem Meßschritt das Meßketten-Ausgangssignal mit aus der Steilheit und der Nullpunktverschiebung gewonnenen Kompensationsgrößen kompensiert wird.

Die Ausgangssignale von ionen- oder redoxpotential-sensitiven Meßketten können nicht direkt verwendet werden, da die Ausgangssignale einzelner Meßketten voneinander abweichen können, obwohl die Meßketten gleich aufgebaut sind. Aus diesem Grund wird jede Meßkette vor ihrem erstmaligen Einsatz zum Messen einer Kalibrierroutine unterworfen. Hierbei wird die Meßkette mit mindestens zwei Pufferlösungen beaufschlagt, von denen jeweils bekannt ist, wie das Ausgangssignal der Meßkette theoretisch aussehen sollte. Wenn die Meßkette beispielsweise zur pH-Messung verwendet werden soll, wird die Meßkette mit zwei Pufferlösungen mit jeweils definierten, unterschiedlichen pH-Werten beaufschlagt. Aus den gemessenen Werten läßt sich die Steigung, d.h. im Fall der ionensensitiven Meßkette der Anstieg der Ausgangsspannung mit zunehmender Konzentration einer bestimmten Ionenart, und die Nullpunktverschiebung, d.h. die Abweichung des Ausgangssignals vom Wert Null bei einer Pufferlösung, die theoretisch den Wert Null erzeugen sollte, ermitteln. Die gemessenen Ausgangssignale der Meßkette, d.h. die mindestens zwei Spannungen, werden bei modernen Meßgeräten von einem Mikroprozessor zusammen mit den bekannten Werten der Kalibrierungs-Pufferlösungen zur Berechnung der individuellen Steilheit und des Nullpunktfehlers der jeweiligen Meßkette benutzt. Da auch die Temperatur Einfluß auf die Meßketten-Steilheit hat, wird sowohl bei der Kalibrierung als auch im Betrieb die Temperatur der Meßkette erfaßt. Auch die gemessene Temperatur wird bei der Korrektur der Steilheit verwendet.

Der Mikroprozessor oder eine andere digitale Bearbeitungseinrichtung korrigiert nun das Ausgangssignal der Meßkette mit den ermittelten Korrekturfaktoren, um die Steilheit und die Nullpunktverschiebung zu normieren. Hierbei ist es notwendig, daß das Signal vom Mikroprozessor, das in digitaler Form zur Verfügung gestellt wird, digital/analog gewandelt wird. Dabei entstehen jedoch, bedingt durch die Auflösung des Digital/Analog-Wandlers, Sprünge in der Ausgangsspannung. Solange das Ausgangssignal digital angezeigt wird, stören diese Sprünge nicht weiter. Sie machen sich jedoch nachteilig bemerkbar, wenn mit dem Ausgangssignal ein analoger Schreiber angesteuert werden soll. Der Schreiber kann dann keine kontinuierliche Kurve mehr zeichnen. Vielmehr entsteht eine Treppenkurve. Die Stufen dieser Treppenkurve machen sich besonders dann unangenehm bemerkbar, wenn ein Teil des Meßbereichs gedehnt dargestellt werden soll. Verwendet man beispielsweise einen 12-Bit-D/A-Wandler in einem pH-Meßgerät, dann entsprechen 4.096 Stufen dem Bereich pH 0...14. Wenn hierbei durch eine Dehnung der Meßbereich pH 7...8 auf einer Schreiberbreite von 200 mm dargestellt werden soll, beträgt der kleinste darstellbare Schritt 0,7 mm.

Der Erfindung liegt die Aufgabe zugrunde, eine Ausgangsschaltung und ein Verfahren anzugeben, mit denen ein Ausgangssignal erzeugt werden kann, das in Bezug auf Steilheit, Nullpunkt und gegebenenfalls Meßkettentemperatur kompensiert ist und keine störenden Sprünge aufweist.

Diese Aufgabe wird bei einer Ausgangsschaltung der eingangs genannten Art dadurch gelöst, daß der Signaleingang auch mit einem Verstärker verbunden ist, dessen Verstärkungsfaktor und Nullpunktverschiebung durch die Steuereinrichtung einstellbar ist, wobei der Ausgang des Verstärkers mit dem Signalausgang verbunden ist.

Die Kompensation des Meßketten-Ausgangssignals erfolgt also hier durch einen Verstärker, wobei die Parameter des Verstärkers einstellbar sind. Ist beispielsweise die ermittelte Steilheit der Meßkette zu gering, wird der Verstärkungsfaktor des Verstärkers vergrößert, so daß die theoretisch erwünschte Kennlinie wieder erreicht wird. Gleichermaßen kann man den Nullpunkt herauf- oder heruntersetzen, so daß das Ausgangssignal der Meßkette durch die Kompensierung wieder in ein der Theorie entsprechendes Ausgangssignal umgewandelt werden kann. Hierbei müssen keine Rechnungen mehr erfolgen. Digital gespeicherte Werte, die in analoge Größen umgewandelt werden müssen, können das Ausgangssignal der Ausgangsschaltung nicht mehr negativ beeinflußen.

In einer bevorzugten Ausführungsform ist der Verstärker als Differenzverstärker ausgebildet, dessen invertierender Eingang mit einem Summationspunkt verbunden ist, der mit einem Meßspannungszweig zum Einspeisen der Meßspannung und mit einem Nullpunktspannungszweig zum Einspeisen einer Nullpunktspannung verbunden ist, wobei die Steuereinrichtung die Nullpunktspannung in Abhängigkeit von der Nullpunktverschiebung der Meßkette einstellt. Ein einfacher Differenzverstärker ist wesentlich preisgünstiger auszuführen als im Handel erhältliche programmierbare Verstärker (PGA, programmable gain amplifier). Ferner ist der Stromverbrauch eines Differenzverstärkers wesentlich geringer. Der Nullpunkt des Differenzverstärkers läßt sich auf einfache Art und Weise dadurch verschieben, daß an den Summationspunkt eine kleinere oder eine größere Nullpunktspannung angelegt wird. Für den theoretischen Fall, daß die Meßkette keine Nullpunktverschiebung aufweist, ist auch die Nullpunktspannung gleich Null.

Vorteilhafterweise weist der Differenzverstärker einen Verstärkungsfaktor größer als 1 auf und die Steuereinrichtung erzeugt eine um einen von der Steilheit der Meßkette abhängigen Faktor verkleinerter Meßspannung, die dem Summationspunkt zugeführt wird. Die Verkleinerung der Meßspannung wird durch den Verstärkungsfaktor größer als 1 des Differenzverstärkers wieder ausgeglichen. Durch die vorherige Verkleinerung des Ausgangssignals der Meßkette, die in einem mehr oder weniger starken Maß erfolgen kann, läßt sich auch die Korrektur einer Steilheit dahingehend bewirken, daß die Steilheit vergrößert wird. Dies ist insbesondere bei pH-Meßketten der Fall, wo die theoretisch mögliche Steilheit der Meßkette, d.h. eine Vergrößerung der Ausgangsspannung um einen vorbestimmten Wert bei einer Erhöhung des pH-Wertes um ein vorbestimmtes Inkrement, in der Regel nicht erreicht wird. Der Gesamtverstärkungsfaktor der Ausgangsschaltung wird durch das Produkt aus Verkleinerungsfaktor und Verstärkungsfaktor des Differenzverstärkers gebildet.

In einer besonders bevorzugten Ausführungsform sind die Nullpunktspannung und/oder die verkleinerte Meßspannung durch puls-pausen-modulierte Spannungen gebildet. Eine Puls-Pausen-Modulation läßt sich sehr leicht durchführen. Hierzu sind lediglich Schalter erforderlich. Das Tastverhältnis, d.h. das Verhältnis von Pulsbreite zu Periodenlänge, läßt sich sehr leicht steuern. Über das Tastverhältnis läßt sich beispielsweise der Verkleinerungsfaktor für die Meßspannung sehr leicht und anschaulich einstellen.

Vorteilhafterweise betätigt die Steuereinrichtung eine Nullpunkt-Schalteinrichtung, die den Nullpunktspannungszweig zwischen zwei vorbestimmten Spannungspegeln hin- und herschaltet. Je nach dem Tastverhältnis stellt sich die Nullpunktspannung dann auf einen Wert zwischen den beiden vorbestimmten Spannungspegeln ein. Dabei ist im Prinzip im Mittel jeder Wert zwischen den beiden Spannungspegeln als Nullpunktspannung erreichbar.

Hierbei ist bevorzugt, daß die Pegel der beiden Spannungen entgegengesetzt gleich sind. Diese Ausführungsform vereinfacht die Ausgestaltung. Um eine Nullpunktspannung von Null zu erhalten, muß das Tastverhältnis 50 % betragen, d.h. die Pulse haben die gleichen Längen wie die Pausen.

Auch ist bevorzugt, daß die Steuereinrichtung eine Meß-Schalteinrichtung betätigt, die den Meßspannungszweig zwischen der Meßspannung und Masse hin- und herschaltet. Die Meßspannung, d.h. die Ausgangsspannung der Meßkette, wird im Mittel dann nur mit einem Teil ihres Betrages, der dem Tastverhältnis entspricht, an den Summationspunkt weitergeleitet. Das Tastverhältnis entspricht in diesem Fall genau dem Verkleinerungsfaktor.

Bevorzugterweise ist dem Differenzverstärker ein Tiefpassfilter nachgeschaltet. Der Tiefpassfilter beseitigt möglicherweise noch verbleibende Störungen, die durch die Umschaltfrequenzen der Nullpunkt-Schalteinrichtung und der Meß-Schalteinrichtung auftreten könnten.

Die Aufgabe wird auch durch ein Verfahren der eingangs genannten Art gelöst, bei dem das Meßketten-Ausgangssignal analog verstärkt wird, wobei der Verstärkungsfaktor und der Offset des Verstärkers in Abhängigkeit von den Kompensationsgrößen im Kalibrierungsschritt verändert werden.

Die Einstellung des Verstärkungsfaktors und des Offset, d.h. der Nullpunktverschiebung, ist also nur einmal, nämlich im Kalibrierungsschritt notwendig. Sobald die Meßkette einmal kalibriert ist, erfolgt die Weiterverarbeitung des Meßketten-Ausgangssignals beispielsweise für den Schreiberausgang praktisch rein analog, d.h. es können keine Sprünge mehr durch eine Digital/Analog-Wandlung eines gespeicherten Kompensationswerts erfolgen. Der Verstärkungsfaktor kann sich zwar noch aufgrund einer Temperaturänderung verändern. Diese Veränderung geschieht aber aufgrund der in der Regel großen Zeitkonstante einer derartigen Temperaturkonstanten sehr langsam, so daß nur selten Sprünge im Ausgangssignal zu befürchten sind.

Bevorzugterweise werden der Verstärkungsfaktor und der Offset durch eine Puls-Pausen-Modulation des Meßsginals bzw. einer Nullpunktspannung beeinflußt, wobei das jeweilige Tastverhältnis veränderbar ist. Die Veränderung des Tastverhältnisses läßt sich beispielsweise durch einen Mikroprozessor sehr leicht erreichen.

Die Erfindung wird im folgenden anhand eines bevorzugten Ausführungsbeispiels in Verbindung mit der Zeichnung beschrieben. Darin zeigen:
Fig. 1 eine Ausgangsschaltung und
Fig. 2 ein Ausführungsbeispiel des Verstärkers.

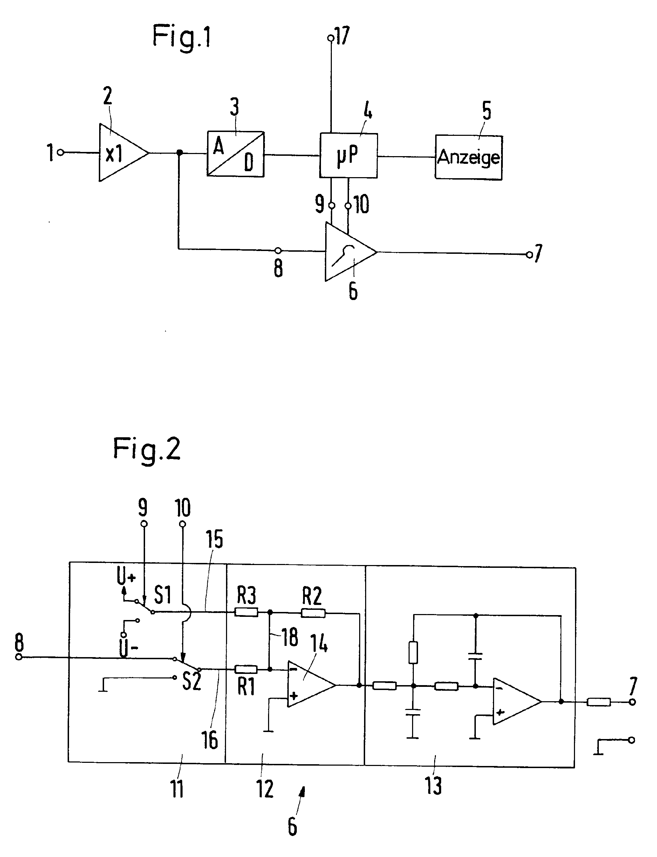

Die in Fig. 1 dargestellte Schaltungsanordnung weist einen Signaleingang 1 auf, der mit einem Impedanzwandler 2 verbunden ist. Der Signaleingang 1 kann dadurch sehr hochohmig gemacht werden. Der Ausgang des Impedanzwandlers 2 ist mit einem A/D-Wandler 3 verbunden, dessen Ausgang mit einem Mikroprozessor 4 verbunden ist. Der Ausgang des Mikroprozessors 4 ist mit einer Anzeige verbunden.

Der Ausgang des Impedanzwandlers 2 ist über eine Klemme 8 mit dem Eingang eines programmierbaren Verstärkers 6 verbunden. Der Ausgang des programmierbaren Verstärkers 6 ist mit einem Signalausgang 7 verbunden.

Der Verstärker 6 weist zwei Steuereingänge 9, 10 auf, die mit dem Mikroprozessor 4, der hier als Steuereinrichtung dient, verbunden sind. Mit Hilfe des Steuereingangs 9 wird die Nullpunktverschiebung und mit Hilfe des Steuereingangs 10 der Verstärkungsfaktor des Verstärkers 6 eingestellt.

Der Mikroprozessor weist einen Temperatureingang 17 auf, über den ihm die Temperatur der Meßkette, die an den Signaleingang 1 angeschlossen werden kann, zugeführt wird.

Der prinzipielle Aufbau des Verstärkers 6 ist in Fig. 2 dargestellt. Der Verstärker 6 weist eine Schalteinrichtung 11, eine Differenzverstärkeranordnung 12 und einen Tiefpassfilter 13 auf. Die Differenzverstärkeranordnung 12 weist einen Differenzverstärker 14 auf, dessen nicht invertierender Eingang mit Masse verbunden ist. Der invertierende Eingang ist mit einem Summationspunkt 18 verbunden. Der Summationspunkt 18 ist mit einem Nullpunktspannungszweig 15 verbunden, der einen Widerstand R3 aufweist, und mit einem Meßspannungszweig 16, der einen Widerstand R1 aufweist. Der Rückkopplungszweig des Differenzverstärkers 14, also die Verbindung vom Ausgang zum invertierenden Eingang des Differenzverstärkers 14, weist einen Widerstand R2 auf. Der Widerstand R2 ist größer als der Widerstand R1, so daß die Differenzverstärkeranordnung 12 einen Verstärkungsfaktor größer 1 hat. Der Widerstand R3 ist größer als der Widerstand R2.

Die Schalteinrichtung 11 weist einen ersten Schalter S1 auf, der über den Steuereingang 9 vom Mikroprozessor 4 betätigbar ist. Der Schalter S1 schaltet den Nullpunktspannungszweig 15 zwischen einer positiven Spannung V+ und einer negativen Spannung V- hin und her. Die beiden Spannungen, zwischen denen der Nullpunktspannungszweig 15 hin- und hergeschaltet wird, sind entgegengesetzt gleich. Der Mittelwert der Spannung, die am Nullpunktspannungszweig 15 anliegt, richtet sich also nach dem Tastverhältnis oder dem Puls-Pausen-Verhältnis, mit dem der Schalter S1 zwischen den beiden Spannungen V+ und V- hin- und hergeschaltet wird. Bei einem Tastverhältnis von 50 %, d.h. wenn der Schalter S1 den Nullpunktspannungszweig über die Hälfte einer Schaltperiode mit der positiven Spannung V+ verbindet und über die andere Hälfte mit der negativen Spannung V-, stellt sich im Nullpunktspannungszweig 15 im Mittel die Spannung Null ein. In diesem Fall ergibt sich auch kein Offset, d.h. keine Nullpunktverschiebung.

Der Meßspannungszweig ist mit einem Schalter S2 verbunden, der über den Steuereingang 10 vom Mikroprozessor 4 gesteuert wird. Der Schalter S2 schaltet den Meßspannungszweig 16 zwischen der Klemme 8 und Masse hin und her. Im Mittel gelangt also nur ein Bruchteil der Meßspannung vom Ausgang des Impedanzwandlers 2 an den Summationspunkt 18, wobei der Bruchteilsfaktor durch das Tastverhältnis bestimmt wird, mit dem der Schalter S2 umgeschaltet wird. Wenn das Tastverhältnis 50 % beträgt, gelangt im Mittel nur die Hälfte der Meßspannung über den Widerstand R1 an den Summationspunkt 18. Ist hingegen der Meßspannungszweig 16 über eine ganze Schaltperiode mit der Klemme 8 verbunden, gelangt die volle Meßspannung über den Widerstand R1 an den Summationspunkt 18. Da der Widerstand R2 größer als der Widerstand R1 ist und die Differenzverstärkeranordnung 12 somit einen Verstärkungsfaktor größer als 1 hat, läßt sich am Ausgang der Differenzverstärkeranordnung 12 ein Signal gewinnen, das größer oder kleiner als das Meßsignal ist, wobei der Vergrößerungs- oder Verkleinerungsfaktor durch das Tastverhältnis S2 bestimmt wird. Der Mikroprozessor 4 kann also durch Verändern des Tastverhältnisses den Verstärkungsfaktor in gewissen Grenzen variieren. Das Ausgangssignal der Differenzverstärkeranordnung 12 wird durch den Tiefpassfilter 13 gefiltert. Der Tiefpassfilter 13 eliminiert die Frequenzanteile, die durch die Schalter S1, S2 auf das Ausgangssignal aufmoduliert sein können.

Am Signalausgang 7 läßt sich also ein störungsfreies analoges Signal gewinnen, das bezüglich Steilheit und Nullpunktverschiebung kompensiert ist.

Die Arbeitsweise der Anordnung soll am Beispiel einer pH-Meßkette erläutert werden. Vor der erstmaligen Inbetriebnahme wird die pH-Meßkette mit dem Signaleingang 1 verbunden. Die Meßkette wird mit zwei verschiedenen Pufferlösungen mit definierten pH-Werten beaufschlagt. Bei diesem Kalibrierschritt werden die beiden gemessenen Spannungen von dem Mikroprozessor zusammen mit den bekannten pH-Werten der Pufferlösungen zur Berechnung der individuellen Steilheit und des Nullpunktfehlers der betreffenden Meßkette benutzt. Hierzu wandelt der A/D-Wandler 3 die gemessenen Spannungen in digitale Werte um, die vom Mikroprozessor 4 verarbeitet werden können. Der Mikroprozessor 4 errechnet dann Kompensationsgrößen, nämlich einmal einen Korrekturfaktor für die Steilheit und zum anderen eine Korrekturgröße für die Nullpunktverschiebung.

Bei den folgenden Meßschritten, bei denen die Meßkette verwendet wird, um den unbekannten pH-Wert einer Pufferlösung zu ermitteln, verstellt der Mikroprozessor 4 den Verstärkungsfaktor des Verstärkers 6 und verschiebt gegebenenfalls den Nullpunkt, so daß am Signalausgang 7 die gewünschte Größe zur Verfügung steht.

Falls dies gewünscht oder erforderlich ist, kann der Mikroprozessor 4 auch die Temperatur in die Verstellung des Verstärkungsfaktors bzw. die Verschiebung des Nullpunkts einfließen lassen, wobei dem Mikroprozessor die Temperaturinformation über den Temperatureingang 17 zugeführt wird.

## Patentansprüche

1. Ausgangsschaltung zur analogen Ausgabe eines in Bezug auf Steilheit und Nullpunkt kompensierten Meßsignals einer ionen- oder redoxpotential-sensitiven Meßkette mit einem Signaleingang (1) zum Einspeisen des Meßsignals, einem mit dem Eingang verbundenen A/D-Wandler (3), einer mit dem A/D-Wandler (3) verbundenen Steuereinrichtung (4), gegebenenfalls einer Temperaturmeßeinrichtung zur Erfassung der Temperatur der Meßkette, die mit der Steuereinrichtung verbunden ist, und mit einem Signalausgang (7), dadurch gekennzeichnet, daß der Signaleingang (1) auch mit einem Verstärker (6) verbunden ist, dessen Verstärkungsfaktor und Nullpunktverschiebung durch die Steuereinrichtung (4) einstellbar ist, wobei der Ausgang des Verstärkers (6) mit dem Signalausgang (7) verbunden ist.

2. Schaltung nach Anspruch 1, dadurch gekennzeichnet, daß der Verstärker (6) als Differenzverstärker (14) ausgebildet ist, dessen invertierender Eingang (-) mit einem Summationspunkt (18) verbunden ist, der mit einem Meßspannungszweig (16) zum Einspeisen der Meßspannung und mit einem Nullpunktspannungszweig (15) zum Einspeisen einer Nullpunktspannung verbunden ist, wobei die Steuereinrichtung die Nullpunktspannung in Abhängigkeit von der Nullpunktverschiebung der Meßkette einstellt.

3. Schaltung nach Anspruch 2, dadurch gekennzeichnet, daß der Differenzverstärker (14) einen Verstärkungsfaktor größer als 1 aufweist und daß die Steuereinrichtung (4) eine um einen von der Steilheit der Meßkette abhängigen Faktor verkleinerte Meßspannung erzeugt, die dem Summationspunkt (18) zugeführt wird.

4. Schaltung nach Anspruch 2 oder 3, dadurch gekennzeichnet, daß die Nullpunktspannung und/oder die verkleinerte Meßspannung durch puls-pausen-modulierte Spannungen gebildet sind.

5. Schaltung nach Anspruch 4, dadurch gekennzeichnet, daß die Steuereinrichtung (4) eine Nullpunkt-Schalteinrichtung (S1) betätigt, die den Nullpunktspannungszweig (15) zwischen zwei vorbestimmten Spannungspegeln (V+, V-) hin- und herschaltet.

6. Schaltung nach Anspruch 5, dadurch gekennzeichnet, daß die Pegel der beiden Spannungen (V+, V-) entgegengesetzt gleich sind.

7. Schaltung nach einem der Ansprüche 4 bis 6, dadurch gekennzeichnet, daß die Steuereinrichtung (4) eine Meß-Schalteinrichtung (S2) betätigt, die den Meßspannungszweig (16) zwischen der Meßspannung (8) und Masse hin- und herschaltet.

8. Schaltung nach einem der Ansprüche 4 bis 7, dadurch gekennzeichnet, daß dem Differenzverstärker (14) ein Tiefpassfilter (13) nachgeschaltet ist.

9. Verfahren zum Ausgeben eines analogen Meßsignals einer ionen- oder redoxpotential-sensitiven Meßkette, bei dem in einem Kalibrierschritt die Steilheit und die Nullpunktverschiebung der Meßkette aus in Verbindung mit mindestens zwei Normproben gewonnenen Ausgangssignalen errechnet und abgespeichert werden und in einem Meßschritt das Meßkettenausgangssignal mit aus der Steilheit und der Nullpunktverschiebung gewonnenen Kompensationsgrößen kompensiert wird, dadurch gekennzeichnet, daß das Meßkettenausgangssignal analog verstärkt wird, wobei der Verstärkungsfaktor und der Offset des Verstärkers (6) in Abhängigkeit von den Kompensationsgrößen im Kalibrierungsschritt verändert werden.

10. Verfahren nach Anspruch 9, dadurch gekennzeichnet, daß der Verstärkungsfaktor und der Offset durch eine Puls-Pausen-Modulation des Meßsignals bzw. einer Nullpunktspannung beeinflußt werden, wobei das jeweilige Tastverhältnis veränderbar ist.

## Claims

1. Output circuit for analogically indicating a measuring signal of an ion or redox potential-sensitive electrode system which is zero and slope corrected, comprising a signal input (1) for supplying the measuring signal, an A-D converter (3) connected to the input, a controller (4) connected to the A-D converter (3), optionally a temperature measuring device for determining the temperature of the electrode system which is connected to the controller, and a signal output (7), characterised in that the signal input (1) is also connected to an amplifier (6), the gain and zero displacement of which can be adjusted by the controller (4), the output of the amplifier (6) being connected to the signal output (7).

2. Circuit according to claim 1, characterised in that the amplifier (6) is a differential amplifier (14), the inverting input (-) of which is connected to a summing point (18) which is connected to a measuring voltage branch (16) for supplying the measuring voltage and to a zero voltage branch (15) for supplying a zero voltage, the controller adjusting the zero voltage as a function of the zero displacement of the electrode system.

3. Circuit according to claim 2, characterised in that the differential amplifier (14) has a gain of more than 1 and that the controller (4) produces a measuring voltage reduced by a factor dependent on the slope of the electrode system which is supplied to the summing point (18).

4. Circuit according to claim 2 or claim 3, characterised in that the zero voltage and/or the reduced measuring voltage are formed by pulse-space modulated voltages.

5. Circuit according to claim 4, characterised in that the controller (4) actuates a zero switching device (S1) which toggles the zero voltage branch (15) between two predetermined voltage levels (V+, V-).

6. Circuit according to claim .5, characterised in that the levels of the two voltages (V+, V-) are opposite and equal.

7. Circuit according to one of claims 4 to 6, characterised in that the controller (4) actuates a measuring switching device (S2) which toggles the measuring voltage branch (16) between the measuring voltage (8) and earth.

8. Circuit according to one of claims 4 to 7, characterised in that lowpass filter (13) is connected after the differential amplifier (14).

9. Method for indicating an analogue measuring signal of an ion or redox potential-sensitive electrode system, in which, in a calibration step, the slope and the zero displacement of the electrode system are calculated from output signals obtained in association with at least two standard tests and are stored and, in a measuring step, the electrode system output signal is corrected by means of compensating variables obtained from the slope and the zero displacement, characterised in that the electrode system output signal is analogically amplified, the gain and the offset of the amplifier (6) being altered in the calibration step as a function of the compensating variables.

10. Method according to claim 9, characterised in that the gain and the offset are influenced by pulse-space modulation of the measuring signal or a zero voltage, the respective pulse duty ratio being variable.

## Revendications

1. Circuit de sortie pour l'indication analogique d'un signal de mesure compensé par rapport au point zéro et à la pente d'une chaîne de mesure sensible au potentiel ionique ou redox avec une entrée de signaux (1) pour l'alimentation du signal de mesure, un convertisseur analogique numérique (3) relié à l'entrée, un dispositif de commande (4) relié au convertisseur analogique numérique (3), éventuellement un dispositif de mesure de température pour la saisie de la température de la chaîne de mesure qui est relié au dispositif de commande, et une sortie de signaux (7), caractérisé en ce que l'entrée des signaux (1) est reliée à l'amplificateur (6), dont le facteur d'amplification et de décalage du point zéro est réglable par le dispositif de commande (4), la sortie de l'amplificateur (6) étant reliée à la sortie de signaux (7).

2. Circuit selon la revendication 1, caractérisé en ce que l'amplificateur (6) est conçu comme amplificateur différentiel (14), dont l'entrée d'inversion (-) est reliée à un point de totalisation (18) qui est relié à une branche de tension de mesure (16) pour l'alimentation de la tension de mesure et à une branche de tension de point zéro (15) pour l'alimentation d'une tension de point zéro en fonction du décalage de point zéro de la chaîne de mesure.

3. Circuit selon la revendication 2, caractérisé en ce que l'amplificateur différentiel (14) présente un facteur d'amplification supérieur à 1 et en ce que le dispositif de commande (4) produit une tension de mesure réduite d'un facteur dépendant de la pente de la chaîne de mesure, tension de mesure qui est amenée au point de la totalisation (18).

4. Circuit selon la revendication 2 ou 3, caractérisé en ce que la tension du point zéro et/ou la tension de mesure réduite sont formées par les tensions modulées par impulsions-intervalles.

5. Circuit selon la revendication 4, caractérisé en ce que le dispositif de commande (4) actionne un système de commutation de point zéro (S1) qui commute en va-et-vient la branche de tension de point zéro (15) entre deux niveaux de tension prédéterminés (V+, V-).

6. Circuit selon la revendication 5, caractérisé en ce que les niveaux des deux tensions (V+, V-) sont identiques dans le sens opposé.

7. Circuit selon l'une des revendications 4 à 6, caractérisé en ce que le dispositif de commande (4) actionne le dispositif de commutation de mesure (S2) qui commute en va-et-vient la branche de tension de mercure (16) entre la tension de mesure (8) et la masse.

8. Circuit selon l'une des revendications 4 à 7, caractérisé en ce qu'un filtre passe bas (13) est monté en aval de l'amplificateur différentiel (14).

9. Procédé pour l'indication d'un signal de mesure analogique d'une chaîne de mesure sensible au potentiel ionique ou redox, dans lequel dans une étape d'étalonnage on calcule et on met en mémoire la pente et le décalage de point zéro de la chaîne de mesure à partir des signaux de sortie obtenus en liaison avec au moins deux éprouvettes normalisées et dans une étape de mesure on compense le signal de sortie de chaîne de mesure avec les valeurs de compensation obtenues à partir de la pente et du décalage de point zéro, procédé caractérisé en ce que le signal de sortie de la chaîne de mesure est amplifié analogiquement, ce en quoi le facteur d'amplification et le décalage de l'amplificateur (6) sont modifiés en fonction des valeurs de compensation dans l'étape d'étalonnage.

10. Procédé selon la revendication 9, caractérisé en ce que le facteur d'amplification et le décalage sont influencés par une modulation impulsions-intervalles du signal de mesure ou d'une tension de point zéro, le rapport ou facteur respectif d'utilisation des impulsions étant variable.
